# EUROPÄISCHE PATENTSCHRIFT

(11) **EP 2 479 469 B1**
(45) Veröffentlichungstag und Bekanntmachung des Hinweises auf die Patenterteilung: **15.06.2016**
(21) Anmeldenummer: 11008902.6
(22) Anmeldetag: 09.11.2011
(51) Int. Cl.: F16L 23/04, F16L 23/16, F16L 23/22, F01N 13/18

(54) **Verbindungsanordnung und Verfahren zum Herstellen einer Verbindungsanordnung**
Connection assembly and method for producing same
Ensemble raccord et procédé de fabrication d'un tel ensemble raccord

(30) Priorität: 22.01.2011 DE 102011009230
(43) Veröffentlichungstag der Anmeldung: 25.07.2012
(73) Patentinhaber: NORMA Germany GmbH, 63477 Maintal (DE)
(72) Erfinder: Krüger, Manfred, 63654 Büdingen (DE)
(74) Vertreter: Patentanwälte Olbricht Buchhold Keulertz

(56) Entgegenhaltungen:
- US-A- 2 426 423
- US-A- 2 828 986
- US-A- 4 185 858

## Beschreibung

Die Erfindung betrifft eine Verbindungsanordnung mit zwei Rohrendabschnitten und einer Profilschelle, die ein Schellenband mit einem Boden und zwei geneigten Seitenwänden aufweist, zwischen denen ein ringförmiges Dichtelement angeordnet ist, wobei die Rohrendabschnitte jeweils an ihren einander zugewandten Enden eine umlaufende, nach außen vorstehende Sicke aufweisen, wobei Enden der Seitenwände die Sicken an voneinander abgewandten Seiten hintergreifen, und wobei das Dichtungselement am Boden und den Seitenwänden anliegt.

Ferner betrifft die Erfindung ein Verfahren zum Herstellen einer derartigen Verbindungsanordnung.

Derartige Verbindungsanordnungen kommen beispielsweise im Abgasbereich von Kraftfahrzeugen zum Einsatz. Dort ist in der Regel eine fluiddichte Verbindung zwischen verschiedenen Rohren bzw. Rohrendabschnitten erforderlich. Bisher werden die Rohrendabschnitte mit relativ aufwändigen Flansch- und Dichtungskonstruktionen miteinander verbunden. Dabei wird zunächst jeweils ein Flansch gasdicht an den Rohrendabschnitten angeschweißt. Anschließend werden die Rohrendabschnitte mithilfe eines Verbindungselements miteinander verbunden, das die beiden Flansche übergreift und die Rohrendabschnitte zusammenzieht. Dabei weist das Verbindungselement in der Regel auch ein Dichtungselement auf, das zur Abdichtung der Rohrendabschnitte dient. Für die Aufnahme des Dichtelements ist dabei in der Regel eine zusätzliche Dichtungskammer erforderlich.

Das Herstellen der gasdichten Flanschverbindung erfordert in der Regel zusätzliche Drehteile und ist relativ aufwändig. Durch das Vorsehen und die Auslegung der Dichtungskammer steigt der Aufwand zum Herstellen einer derartigen Verbindung weiter an.

In US 2 426 423 wird eine hydraulische Kupplung für Rohre oder Leitungen offenbart. Weiterhin zeigt US 2 426 423 eine Profilschelle, die ein Schellenband mit einem Boden und zwei geneigten Seitenwänden aufweist. Die Profilschelle verbindet dabei zwei Rohrendabschnitte. Zwischen den geneigten Seitenwänden ist hier auch ein ringförmiges Dichtungselement angeordnet. Es wird weiterhin offenbart, dass die Rohrendabschnitte an ihren einander zugewandten Enden eine umlaufende, nach außen vorstehende Sicke aufweisen und dass Enden der Seitenwände die Sicken an voneinander abgewandten Seiten hintergreifen.

US 2 828 986 offenbart eine Schelle für eine Rohrverbindung. Dabei zeigt US 2 828 986 eine Verbindungsanordnung mit zwei Rohrendabschnitten und einer Profilschelle, und Schellenbändern, die zwei geneigte Seitenwände aufweisen. Ringförmige Dichtungselemente zwischen den Seitenwänden werden ebenfalls offenbart. Es wird weiterhin offenbart, dass die Rohrendabschnitte an ihren einander zugewandten Enden eine umlaufende, nach außen vorstehende Sicke aufweisen und dass Enden der Seitenwände die Sicken an voneinander abgewandten Seiten hintergreifen.

US 4 185 858 offenbart eine Verbindungsanordnung mit zwei Rohrendabschnitten und einer Profilschelle, und einem Schellenband, das geneigte Seitenwände aufweist. US 4 185 858 zeigt weiterhin ein ringförmiges Dichtungselement, das zwischen den geneigten Seitenwänden angeordnet ist. Es wird auch offenbart, dass die Rohrendabschnitte an ihren einander zugewandten Enden eine nach außen vorstehende Sicke aufweisen und dass das Ende der Seitenwände die Sicken an voneinander abgewandten Seiten hintergreifen.

Der Erfindung liegt daher die Aufgabe zugrunde, eine einfache Verbindungsanordnung zum fluiddichten Verbinden zweier Rohrendabschnitte bereit zu stellen.

Bei einer Verbindungsanordnung der eingangs genannten Art wird diese Aufgabe erfindungsgemäß dadurch gelöst, dass das Dichtungselement im Bereich der Enden der Seitenwände eine Ausnehmung aufweist.

Anstatt also wie bisher zusätzliche Drehteile in Form von Flanschen vorzusehen und an den Rohrendabschnitten zu befestigen, ist erfindungsgemäß vorgesehen, die Rohrendabschnitte jeweils mit mindestens einer, nach außen vorstehenden Sicke zu versehen. Eine Sicke stellt einen Bereich des Rohrendabschnitts dar, der nach außen verformt ist und damit einen umlaufenden Wulst um den Rohrendabschnitt bildet. Da die Sicke einstückig mit dem Rohrendabschnitt ausgebildet ist, besteht keine Gefahr, dass an dieser Stelle ein Fluid entweichen kann. Dabei erhöht sich durch die Umformung des Rohrendabschnitts mit der Sicke die Festigkeit des Rohrendabschnitts. Durch den Einsatz einer Profilschelle lässt sich dabei ein in Massenfertigung herstellbares, günstiges Bauteil verwenden. Durch Spannen der Profilschelle werden im Wesentlichen radiale Kräfte von der Profilschelle über das Dichtelement auf die Rohrendabschnitte übertragen, so dass das Dichtelement dicht an die Rohrendabschnitte bzw. an die Enden der Rohrendabschnitte und eine Verbindungsstelle zwischen den Rohrendabschnitten gedrückt wird. Gleichzeitig erfolgt durch die geneigte Ausbildung der Seitenwände eine axiale Kraftübertragung von den Seitenwänden auf die Sicken, wodurch die Rohrendabschnitte axial zusammengedrückt werden. Durch Spannen der Profilschelle erfolgt also gleichzeitig ein Verpressen der Dichtung und ein axiales Zusammendrücken der Rohrendabschnitte. Damit lässt sich auf einfache Weise eine fluiddichte Verbindung erreichen, wobei gleichzeitig ein Lösen der Verbindung verhindert wird. Weiterhin liegt das Dichtungselement am Boden und den Seitenwänden an, wobei das Dichtungselement insbesondere im Bereich der Enden der Seitenwände eine Ausnehmung aufweist. Diese Ausnehmung dient nun dazu, die Profilschelle auf den Sicken vorzupositionieren. Im Übrigen steht aber ein relativ großer Bereich zur Kraftübertragung von der Profilschelle auf die Dichtung zur Verfügung.

Dabei ist besonders bevorzugt, dass die Rohrendabschnitte einen gleichen Durchmesser aufweisen und insbesondere stirnseitig aneinander anliegen. Die Rohrendabschnitte sind also sozusagen stumpf aneinander gelegt und werden dann axial durch die Profilschelle zusammengehalten, die gleichzeitig eine radiale Kraft auf das Dichtungselement ausübt, so dass eine fluiddichte Verbindung erhalten wird. Durch den gleichen Durchmesser der Rohrendabschnitte kann die Profilschelle und insbesondere das Dichtungselement sehr einfach ausgebildet sein.

Vorzugsweise sind Enden der Seitenwände von den Rohrendabschnitten radial beabstandet. Wenn auch im gespannten Zustand die Enden der Seitenwände von den Rohrendabschnitten radial beabstandet sind, wird gewährleistet, dass die radialen Spannkräfte der Profilschelle im Wesentlichen auf das Dichtungselement wirken und dieses zusammenpressen. Eine Kraftübertragung von der Profilschelle direkt auf die Rohrendabschnitte wird dabei vermieden. Vielmehr erfolgt die Kraftübertragung nur auf die Sicken und das Dichtungselement.

Dabei ist besonders bevorzugt, dass die Ausnehmung kleiner ist als die Sicken. Beim Spannen der Profilschelle werden die Sicken in die Ausnehmung hinein gedrückt, wodurch eine Verformung des Dichtungselements erfolgt. Damit ist eine Anlage des Dichtungselements insbesondere auch an den Innenseiten der Sicken gewährleistet, was die Sicherheit der Abdichtung erhöht.

Vorzugsweise ist eine Breite des Bodens kleiner als der Abstand zwischen den Sicken. Dadurch ist gewährleistet, dass die Seitenwände immer eine axiale Kraft auf die Sicken ausüben können, so dass die Rohrendabschnitte axial zusammengedrückt werden. Ein Abstand zwischen den Enden der Seitenwände ist dann größer als die axiale Erstreckung des Bodens. Die Seitenwände sind also V-förmig, aber mit einem flachen Boden, zueinander angeordnet.

Vorzugsweise weisen die Sicken einen in Radialrichtung verlaufenden, geraden Bereich auf. Dadurch wird gewährleistet, dass die Sicken eine ausreichende radiale Erstreckung haben, so dass auch beim Spannen der Profilschelle die Enden der Seitenwände nicht radial an die Rohrendabschnitte anstoßen. Gleichzeitig ist eine ausreichende Kompression des Dichtungselements möglich. Die Sicken können dabei beispielsweise in Radialrichtung etwa eine Erstreckung aufweisen, die circa der doppelten Rohrwandstärke der Rohrendabschnitte entspricht.

In einer bevorzugten Ausgestaltung weist das Dichtungselement an einer radialen Innenseite eine Einlegehülse auf, die einen Spalt zwischen den Rohrendabschnitten axial überdeckt. Eine derartige Einlegehülse ist beispielsweise aus einem relativ zugfesten Material, wie z.B. einem Metall, hergestellt. Die Einlegehülse verhindert ein Eindringen des Dichtungselements in einen Spalt zwischen den Rohrendabschnitten. Dadurch wird ein Zusammendrücken der Rohrendabschnitte einfacher. Gleichzeitig wird verhindert, dass das Dichtungselement durch Kanten an den Enden der Rohrendabschnitte beschädigt wird. Die Einlegehülse muss sich dabei axial nicht viel weiter erstrecken als der Spalt zwischen den Rohrendabschnitten bei nicht gespannter Profilschelle beträgt.

In einer anderen bevorzugten Ausgestaltung weist das Dichtungselement an einer radialen Innenseite ein Ringelement auf, das sich in einen Spalt zwischen den Rohrendabschnitten hinein erstreckt, wobei das Ringelement einstückig oder zweistückig mit dem Dichtungselement ausgebildet ist. Durch dieses Ringelement wird ein Anschlag gebildet, gegen den die Enden der Rohrendabschnitte axial gedrückt werden. Dadurch erfolgt zum einen eine Zentrierung des Dichtungselements und damit der Profilschelle bezüglich der Rohrendabschnitte und zum anderen eine zusätzliche Abdichtung. Auch ein direkter Kontakt zwischen den Enden der Rohrendabschnitte wird verhindert, wodurch eine Beschädigung dieser Enden vermieden wird. Das Ringelement kann dabei einstückig oder zweistückig mit dem Dichtungselement ausgebildet sein, also entweder als zusätzliches Element an der Innenseite des Dichtungselements angeordnet sein oder Teil des Dichtungselements sein.

Die Aufgabe wird durch ein Verfahren der eingangs genannten Art dadurch gelöst, dass in jedem Rohrendabschnitt eine nach außen vorstehende Sicke eingebracht wird, wobei ein Abstand zwischen den Sicken so gewählt wird, dass Seitenwände der Profilschelle die Sicken übergreifen und Enden der Seitenwände von den Rohrendabschnitten radial beabstandet sind.

Das Einbringen der Sicken stellt eine relativ einfache Formgebung dar, die das Einbringen axialer Kräfte zulässt, durch die Rohrendabschnitte axial gehalten oder sogar aufeinander zu gedrückt werden. Die axialen Kräfte werden dabei mithilfe der Profilschelle bzw. über deren geneigte Seitenwände eingebracht, die die Sicken berühren. Beim Spannen der Profilschelle erfolgt dabei gleichzeitig eine Kompression des Dichtungselements, was für die erforderliche Dichtigkeit der Verbindung sorgt. Die Profilschelle wird dabei derart positioniert, dass sich das Dichtungselement symmetrisch über der Verbindungsstelle der Rohrendabschnitte befindet. Dies kann dadurch erreicht werden, dass die Sicken mit gleichem Abstand zum jeweiligen Ende der Rohrendabschnitte ausgeformt sind. Im Unterschied zu angeschweißten Flanschen stellen die Sicken dabei eine einstückige Verformung der Rohrendabschnitte dar, wodurch keine Gefahr von Undichtigkeiten besteht. Dabei ist das Vorsehen von umlaufenden Sicken weniger aufwändig als das Herstellen der Flansche als zusätzliche Drehteile, die noch gasdicht auf den Rohrendabschnitten befestigt werden müssen. Insgesamt lässt sich so also eine sehr einfach und kostengünstig herstellbare Verbindungsanordnung zum fluiddichten Verbinden zweier Rohrendabschnitte erreichen.

Die Erfindung wird im Folgenden anhand eines bevorzugten Ausführungsbeispiels in Verbindung mit der Zeichnung beschrieben. Hierin zeigt:
- Fig. 1: einen Querschnitt einer Verbindungsanordnung in schematischer Darstellung,
- Fig. 2: ein Dichtungselement in einer bevorzugten Ausführungsform und
- Fig. 3: das Dichtungselement in einer weiteren Ausführungsform.

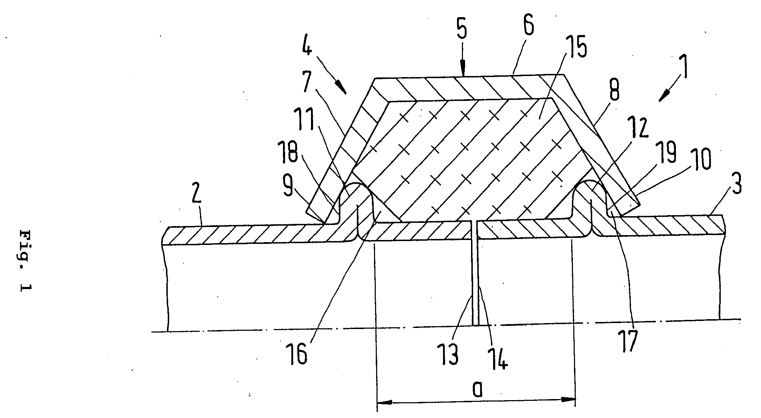

Figur 1 zeigt eine Verbindungsanordnung 1 mit zwei Rohrendabschnitten 2, 3, die mithilfe einer Profilschelle 4 zusammengehalten werden. Die Profilschelle 4 weist ein Schellenband 5 auf, das einen Boden 6 und zwei Seitenwände 7, 8 aufweist. Der Aufbau von Profilschellen wird dabei als generell bekannt vorausgesetzt.

Enden 9, 10 der Seitenwände 7, 8 hintergreifen jeweils eine Sicke 11, 12, die jeweils an einem Rohrendabschnitt 2, 3 im Bereich eines Endes 13, 14 angeordnet sind. Die Seitenwände 7, 8 der Profilschelle 4 liegen dabei derart an einer Außenseite der Sicken 11, 12 an, dass beim Spannen der Profilschelle 4 über die Seitenwände 7, 8 eine axiale Kraft auf die Sicken 11, 12 ausgeübt wird, durch die die Rohrendabschnitte 2, 3 aufeinander zu gedrückt werden. Dabei ist es zwar wünschenswert, aber nicht unbedingt erforderlich, dass die Rohrendabschnitte an ihren Stirnseiten aneinander anstoßen. Durch das Zusammenpressen eines Dichtungselements 15, das in der Profilschelle 4 zwischen dem Boden 6 und den Seitenwänden 7, 8 angeordnet ist, erfolgt in jedem Fall eine fluiddichte Abdichtung zwischen den Rohrendabschnitten 2, 3 nach außen. Das Dichtungselement 15 wird dabei beim Spannen der Profilschelle 4 radial zwischen dem Boden 6 und den Rohrendabschnitten 2, 3 komprimiert.

Das Dichtungselement 15 weist im Bereich der Enden 9, 10 der Seitenwände 7, 8 jeweils eine Ausnehmung 16, 17 auf, in die beim Spannen der Profilschelle 4 die Sicken 11, 12 eindringen. Die Ausnehmungen 16, 17 sind dabei allerdings kleiner als die Sicken 11, 12, so dass auch dabei ein Komprimieren des Dichtungselements 15 erfolgt.

Die Sicken 11, 12 sind in einem Abstand a zueinander angeordnet, der größer ist als die axiale Erstreckung des Bodens 6. Dadurch ist gewährleistet, dass über die Seitenwände 7, 8 immer auch axiale Kräfte auf die Sicken 11, 12 ausgeübt werden können. In Radialrichtung erstrecken sich die Sicken 11, 12 dabei derart, dass sie in Radialrichtung verlaufende, gerade Bereiche 18, 19 aufweisen. Da die Sicken durch Materialumformung entstehen, ist eine radiale Außenkante der Sicken immer abgerundet, so dass immer eine günstige Anlage der Seitenwände 7, 8 an die Sicken 11, 12 erfolgt. Durch die entsprechende radiale Erstreckung der Sicken 11, 12 wird dabei gewährleistet, dass die Enden 9, 10 der Seitenwände 7, 8 beim Spannen der Profilschelle 4 nicht radial an die Rohrendabschnitte 2, 3 anstoßen und damit eine weitere Komprimierung des Dichtungselements 15 verhindern würden.

Die Sicken 11, 12 sind dabei symmetrisch an den Rohrendabschnitten 2, 3 ausgebildet, also jeweils im halben Abstand a vom Ende 13, 14 des Rohrendabschnitts 2, 3. Entsprechenderweise deckt das Dichtungselement 15 immer die Verbindungsstelle zwischen den Rohrendabschnitten 2, 3 ab.

Die Profilschelle 4 kann verschiedene Spanneinrichtungen aufweisen, wie beispielsweise eine Spannschraube, was jedoch der Einfachheit halber nicht dargestellt ist.

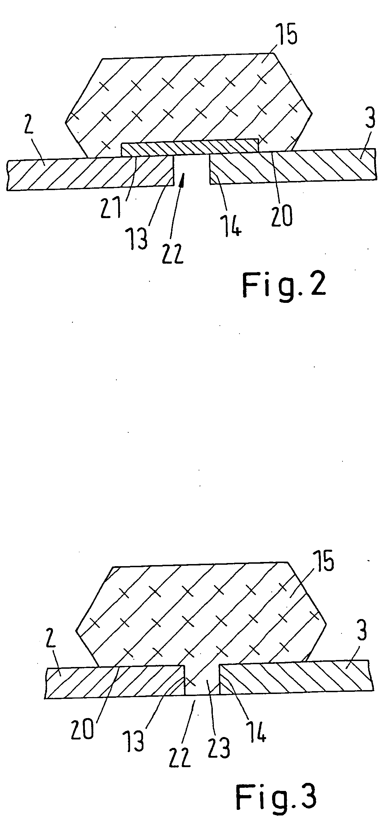

In Fig. 2 ist das Dichtungselement 15 an einer radialen Innenseite 20 mit einer Einlegehülse 21 versehen, wobei die Einlegehülse 21 radial außen an den Rohrendabschnitten 2, 3 anliegt und einen Spalt 22, der zwischen den beiden Rohrendabschnitten 2, 3 bzw. zwischen deren Enden 13, 14 ausgebildet ist, axial überdeckt. Die Einlegehülse 21 ist dabei aus einem relativ unelastischen Material, wie beispielsweise einem Metall gebildet und verhindert beim Spannen der Profilschelle ein Eindringen des Dichtungselements 15 in den Spalt 22, was ein Zusammendrücken der Rohrendabschnitte 2, 3 verhindern würde. Gleichzeitig wird das Dichtungselement 15 im Bereich der Enden 13, 14 der Rohrendabschnitte 2, 3 vor Beschädigungen geschützt.

In Fig. 3 ist eine Ausführungsform des Dichtungselements 15 dargestellt, wobei das Dichtungselement 15 einstückig mit einem Ringelement 23 ausgebildet ist. Das Ringelement 23 erstreckt sich dabei in den Spalt 22 zwischen den Rohrendabschnitten 2, 3. Die Enden 13, 14 der Rohrendabschnitte 2, 3 liegen dabei axial am Ringelement 23 an. Das Ringelement 23 verhindert so einen direkten Kontakt der Enden 13, 14 und verbessert zusätzlich die Dichtungswirkung des Dichtungselements 15.

Anstelle einer einstückigen Ausbildung des Ringelements 23, wie es in Fig. 3 dargestellt ist, kann das Ringelement 23 auch eigenständig ausgebildet sein und an der Innenseite 20 des Dichtungselements 15 angeordnet werden.

Durch die erfindungsgemäße Verbindungsanordnung können die beiden Rohrendabschnitte fluiddicht miteinander verbunden werden, ohne dass zusätzliche Drehteile, wie beispielsweise Flansche, erforderlich sind, die zunächst an den Rohrendabschnitten angeschlossen werden müssen. Vielmehr wird in jedem Rohrendabschnitt eine einfache, umlaufende Sicke ausgebildet, die zur axialen Lagesicherung mithilfe einer Profilschelle dienen. Die Profilschelle dient dabei gleichzeitig dazu, ein Dichtungselement radial an die Rohrendabschnitte anzupressen, wodurch eine Verbindungsstelle zwischen den Rohrendabschnitten abgedichtet wird. Das Ausbilden der Sicken hat dabei den Vorteil, dass diese einstückig mit den Rohrendabschnitten ausgebildet sind, wodurch keine Dichtigkeitsprobleme auftreten. Eine zusätzliche Dichtungskammer ist dabei nicht erforderlich, da der erforderliche Raum durch die Profilschelle bereitgestellt wird. Auf einfache Weise erfolgt also sowohl eine axiale und radiale Lagesicherung, als auch eine fluiddichte Verbindung.

## Patentansprüche

1. Verbindungsanordnung mit zwei Rohrendabschnitten und einer Profilschelle, die ein Schellenband mit einem Boden und zwei geneigten Seitenwänden aufweist, zwischen denen ein ringförmiges Dichtungselement angeordnet ist, wobei die Rohrendabschnitte jeweils an ihren einander zugewandten Enden eine umlaufende, nach außen vorstehende Sicke aufweisen, wobei Enden der Seitenwände die Sicken an voneinander abgewandten Seiten hintergreifen, und wobei das Dichtungselement am Boden und den Seitenwänden anliegt, **dadurch gekennzeichnet, dass** das Dichtungselement im Bereich der Enden (9, 10) der Seitenwände (7, 8) eine Ausnehmung (16, 17) aufweist.

2. Verbindungsanordnung nach Anspruch 1, **dadurch gekennzeichnet, dass** die Rohrendabschnitte (2, 3) einen gleichen Durchmesser aufweisen und insbesondere stirnseitig aneinander anliegen.

3. Verbindungsanordnung nach einem der Ansprüche 1 oder 2, **dadurch gekennzeichnet, dass** ein Abstand a zwischen den Sicken (11, 12) derart gewählt ist, dass Enden (9, 10) der Seitenwände (7, 8) von den Rohrendabschnitten (2, 3) radial beabstandet sind.

4. Verbindungsanordnung nach einem der Ansprüche 1 bis 3, **dadurch gekennzeichnet, dass** die Ausnehmung (16, 17) kleiner ist als die Sicken (11, 12).

5. Verbindungsanordnung nach einem der Ansprüche 1 bis 4, **dadurch gekennzeichnet, dass** eine Breite des Bodens (6) kleiner ist als der Abstand a zwischen den Sicken (11, 12).

6. Verbindungsanordnung nach einem der Ansprüche 1 bis 5, **dadurch gekennzeichnet, dass** die Sicken (11, 12) einen in Radialrichtung verlaufenden geraden Bereich (18, 19) aufweisen.

7. Verbindungsanordnung nach einem der Ansprüche 1 bis 6, **dadurch gekennzeichnet, dass** das Dichtungselement 15 an einer radialen Innenseite (20) eine Einlegehülse (21) aufweist, die einen Spalt (22) zwischen den Rohrendabschnitten (2, 3) axial überdeckt.

8. Verbindungsanordnung nach einem der Ansprüche 1 bis 6, **dadurch gekennzeichnet, dass** das Dichtungselement (15) an einer radialen Innenseite (20) ein Ringelement (23) aufweist, das sich in einen Spalt (22) zwischen den Rohrendabschnitten (2, 3) hinein erstreckt, wobei das Ringelement (23) einstückig oder zweistückig mit dem Dichtungselement (15) ausgebildet ist.

9. Verfahren zum Herstellen einer Verbindungsanordnung mit den Merkmalen zumindest eines der Ansprüche 1 bis 8, **dadurch gekennzeichnet, dass** in jedem Rohrendabschnitt eine nach außen vorstehende Sicke eingebracht wird, wobei ein Abstand zwischen den Sicken so gewählt wird, dass Seitenwände der Profilschelle die Sicken übergreifen und Enden der Seitenwände von den Rohrendabschnitten radial beabstandet sind.

## Claims

1. Connection assembly comprising two pipe end sections and one profiled clamp which has a clamping strip having a base and two inclined side walls, between which an annular sealing element is arranged, wherein the pipe end sections each have a circumferential, outwardly projecting bead at their mutually facing ends, wherein ends of the side walls engage behind the beads on sides remote from one another, and wherein the sealing element bears against the base and the side walls, **characterised in that** the sealing element has a recess (16, 17) in the region of the ends (9, 10) of the side walls (7, 8).

2. Connection assembly according to claim 1, **characterised in that** the pipe end sections (2, 3) have an identical diameter and in particular bear against one another with their front faces.

3. Connection assembly according to any one of claims 1 or 2, **characterised in that** a distance a between the beads (11, 12) is selected such that ends (9, 10) of the side walls (7, 8) are radially spaced apart from the pipe end sections (2, 3).

4. Connection assembly according to any one of claims 1 to 3, **characterised in that** the recess (16, 17) is smaller than the beads (11, 12).

5. Connection assembly according to any one of claims 1 to 4, **characterised in that** a width of the base (6) is smaller than the distance a between the beads (11, 12).

6. Connection assembly according to any one of claims 1 to 5, **characterised in that** the beads (11, 12) have a rectilinear region (18, 19) running in the radial direction.

7. Connection assembly according to any one of claims 1 to 6, **characterised in that** the sealing element 15 has on a radial inner side (20) an inlaid sleeve (21) which axially covers a gap (22) between the pipe end sections (2, 3).

8. Connection assembly according to any one of claims 1 to 6, **characterised in that** the sealing element (15) has on a radial inner side (20) an annular element (23) which extends into a gap (22) between the pipe end sections (2, 3), the annular element (23) being formed in one piece or in two pieces with the sealing element (15).

9. Method for producing a connection assembly having the features of at least one of claims 1 to 8, **characterised in that** an outwardly projecting bead is formed in each pipe end section, wherein a distance between the beads is selected such that side walls of the profiled clamp engage over the beads and ends of the side walls are radially spaced apart from the pipe end sections.

## Revendications

1. Ensemble raccord avec deux sections d'extrémité de tube et un collier de profil, qui présente une bande de collier avec un fond et deux parois latérales inclinées, entre lesquelles un élément d'étanchéité annulaire est agencé, dans lequel les sections d'extrémité de tube présentent respectivement à leurs extrémités se faisant face, un bourrelet périphérique faisant saillie vers l'extérieur, dans lequel des extrémités des parois latérales viennent en prise derrière les bourrelets au niveau de côtés opposés les uns des autres et dans lequel l'élément d'étanchéité s'appuie contre le sol et les parois latérales, **caractérisé en ce que** l'élément d'étanchéité présente un évidement (16, 17) au niveau des extrémités (9, 10) des parois latérales (7, 8).

2. Ensemble raccord selon la revendication 1, **caractérisé en ce que** les sections d'extrémité de tube (2, 3) présentent un même diamètre et s'appuient l'une contre l'autre en particulier côté frontal.

3. Ensemble raccord selon l'une quelconque des revendications 1 ou 2, **caractérisé en ce qu'**une distance a entre les bourrelets (11, 12) est choisie de sorte que des extrémités (9, 10) des parois latérales (7, 8) sont à distance radiale des sections d'extrémité de tube (2, 3).

4. Ensemble raccord selon l'une quelconque des revendications 1 à 3, **caractérisé en ce que** l'évidement (16, 17) est plus petit que les bourrelets (11, 12).

5. Ensemble raccord selon l'une quelconque des revendications 1 à 4, **caractérisé en ce qu'**une largeur du fond (6) est plus petite que la distance a entre les bourrelets (11, 12).

6. Ensemble raccord selon l'une quelconque des revendications 1 à 5, **caractérisé en ce que** les bourrelets (11, 12) présentent une zone rectiligne (18, 19) s'étendant dans la direction radiale.

7. Ensemble raccord selon l'une quelconque des revendications 1 à 6, **caractérisé en ce que** l'élément d'étanchéité 15 présente au niveau d'une face intérieure radiale (20) une douille d'insertion (21) qui recouvre axialement une fente (22) entre les sections d'extrémité de tube (2, 3).

8. Ensemble raccord selon l'une quelconque des revendications 1 à 6, **caractérisé en ce que** l'élément d'étanchéité (15) présente au niveau d'une face intérieure radiale (20) un élément annulaire (23) qui s'étend dans une fente (22) entre les sections d'extrémité de tube (2, 3), l'élément annulaire (23) étant réalisé en une seule pièce ou en deux pièces avec l'élément d'étanchéité (15).

9. Procédé de fabrication d'un ensemble raccord avec les caractéristiques d'au moins une quelconque des revendications 1 à 8, **caractérisé en ce qu'**un bourrelet faisant saillie vers l'extérieur est réalisé dans chaque section d'extrémité de tube, dans lequel une distance entre les bourrelets est choisie de sorte que des parois latérales du collier de profil chevauchent les bourrelets et des extrémités des parois latérales sont à distance radiale des sections d'extrémité de tube.
